Europäisches Patentamt

European Patent Office

Office européen des brevets

(11) Publication number: **0 076 645**
**B1**

## EUROPEAN PATENT SPECIFICATION

(45) Date of publication of patent specification: 27.03.85

(51) Int. Cl.⁴: **H 04 Q 7/00,** H 04 M 15/28, G 08 C 25/00

(21) Application number: 82305179.2

(22) Date of filing: 30.09.82

(54) **Method of and apparatus for transmitting a call charging signal.**

(30) Priority: 30.09.81 JP 155922/81

(43) Date of publication of application: 13.04.83 Bulletin 83/15

(45) Publication of the grant of the patent: 27.03.85 Bulletin 85/13

(84) Designated Contracting States:
DE FR GB IT NL

(56) References cited:
DE-A-2 624 317
DE-A-2 842 397
DE-A-2 929 114
US-A-4 091 361

(73) Proprietor: FUJITSU LIMITED
1015, Kamikodanaka Nakahara-ku
Kawasaki-shi Kanagawa 211 (JP)

(72) Inventor: Honda, Isao c/o FUJITSU LIMITED
Patent Department
1015 Kamikodanaka
Nakahara-ku Kawasaki-shi Kanagawa 211 (JP)
Inventor: Shimizu, Takafumi c/o FUJITSU
LIMITED
Patent Department 1015 Kamikodanaka
Nakahara-ku Kawasaki-shi Kanagawa 211 (JP)

(74) Representative: Sunderland, James Harry et al
HASELTINE LAKE & CO Hazlitt House 28
Southampton Buildings Chancery Lane
London WC2A 1AT (GB)

Courier Press, Leamington Spa, England.

## Description

This invention relates to a method of and apparatus for transmitting a call charging signal.

In a telephone service system in which exchanges and telephones are connected by wires, a call charging signal, for indicating the charge for or cost of a call to a user, is generated by an exchange and transmitted to the telephone (for example, a public telephone) via the wires. For such a charging signal, a carrier signal of frequency such as 50 Hz, 12 kHz or 16 kHz, or a polarity inverting signal, is used and users are given call charges by transmitting such specified frequency signals for example, at particular time intervals.

In a telephone service system in which exchanges and telephones are connected by way of radio links, the call charging signals must be sent to the telephone side via a radio link.

Such a charging signal is transmitted during conversation together with a voice signal and therefore it is essential to prevent such a charging signal interfering with a voice signal.

Moreover, since it is employed for indicating call charges to a user, such a charging signal must be transmitted with high reliability and consideration must be given to preventing erroneous action of a charge processing circuit provided in the public telephone system on the telephone side.

When transmitting a voice signal etc. utilizing radio equipment, input signal amplitude is limited in a circuit in a stage preceding a modulation stage, in order to operate the modulator of the radio equipment with sufficient dynamic range and to transmit the signal within a permitted frequency band. Particularly, it is important to protect the charging signal from removal due to the effects of amplitude limitation at the stage preceding such a modulator stage, when the charging signal is transmitted by superimposition on a voice signal of a signal of a frequency outside the frequency band of the transmitting voice signal used as a carrier.

According to the present invention, there is provided a method of transmitting a call charging signal in a telephone system having an exchange and a user telephone, characterised by the steps of:

detecting the call charging signal as sent from an exchange, on the exchange side;

encoding the detected charging signal as a pulse code signal consisting of a plurality of continuous pulses;

modulating said pulse code signal with a carrier consisting of a frequency signal outside the voice transmitting frequency band of the telephone system;

transmitting the modulated signal to the user telephone side via a radio link after the modulated pulse code signal is superimposed on a voice signal;

detecting and demodulating said modulated pulse code signal into said pulse code signal on the user telephone side;

counting continuous pulses of said pulse code signal; and

regenerating said charging signal, when the count of continuous pulses of said pulse code signal reaches a predetermined value, on the user telephone side.

According to the present invention there is also provided apparatus for putting into effect a method as set forth in the paragraph above.

The present invention is concerned with a signal transmission system in which an exchange and a public or user's telephone system are connected via a radio link and a call charging signal sent from the exchange is transmitted by radio equipment to the user's telephone system.

An embodiment of this invention can provide for the transmission of a call charging signal as a signal of a frequency outside the voice transmitting frequency band (an out-of-band frequency) with the prevention of errors in a charge processing circuit, provided in a public telephone system, resulting from noise.

An embodiment of this invention can provide that a call charging signal carrier (the encoded charging signal modulated by the out-of-band frequency) is reliably transmitted even when the voice signal onto which the charging signal carrier is superimposed is subjected to amplitude limitation in a stage preceding a modulator circuit provided in radio equipment for signal transmission, and can provide that the S/N ratio (signal to noise ratio) is not worsened when the call charging signal is not being transmitted.

In an embodiment of this invention, radio equipment on the side of an exchange detects a charging signal sent from the exchange and encodes it into a pulse code signal consisting of plurality of continuous pulses in order to transmit the charging signal sent from the exchange to the telephone side, by radio equipment, together with a voice signal. This pulse code signal is modulated by a frequency outside the frequency band used for transmitting a voice signal and then transmitted. Simultaneously, radio equipment on the telephone side detects the frequency signal outside the voice frequency band and demodulates it into the pulse code signal and counts the continuous pulses of the pulse code signal. When the counted value reaches a specified value, the radio equipment on the telephone side generates a charging signal, thereby to regenerate the charging signal sent from exchange side, and then transmits it to the telephone system of a user.

In an embodiment of the present invention, a circuit which more deeply limits the amplitude of a voice signal than is ordinarily the case is provided in the radio equipment on the exchange side. This amplitude limiter circuit is operated in synchronization with a charging signal carrier to be superimposed on the voice signal in desired time intervals, and thereafter the charging signal carrier is superimposed on the amplitude-limited voice signal. The resultant signal is subjected to ordinary amplitude limitation and modulated, followed by transmission to the radio equipment on the telephone side.

Reference is made, by way of example, to the accompanying drawings, in which:—

Figure 1 is a schematic block diagram of principal parts of a call charging signal transmission system, illustrating transmission of signals between exchange and user telephone sides, in accordance with an embodiment of the present invention,

Figure 2 is a waveform diagram showing signal waveforms occurring at correspondingly labelled points in Figure 1,

Figure 3 is a schematic block diagram of a pulse counter circuit used in an embodiment of this invention as shown in Figure 1,

Figure 4 is a detailed circuit diagram of one form of the pulse counter circuit of Figure 3,

Figure 5 is a waveform diagram showing signal waveforms occurring at correspondingly labelled points in the pulse counter circuit of Figure 3 and Figure 4,

Figure 6 is a schematic block diagram of principal parts of radio equipment on the exchange side, for illustrating an embodiment of the present invention,

Figure 7 is a waveform diagram showing signal waveforms occurring at correspondingly labelled points in the block diagram of Figure 6.

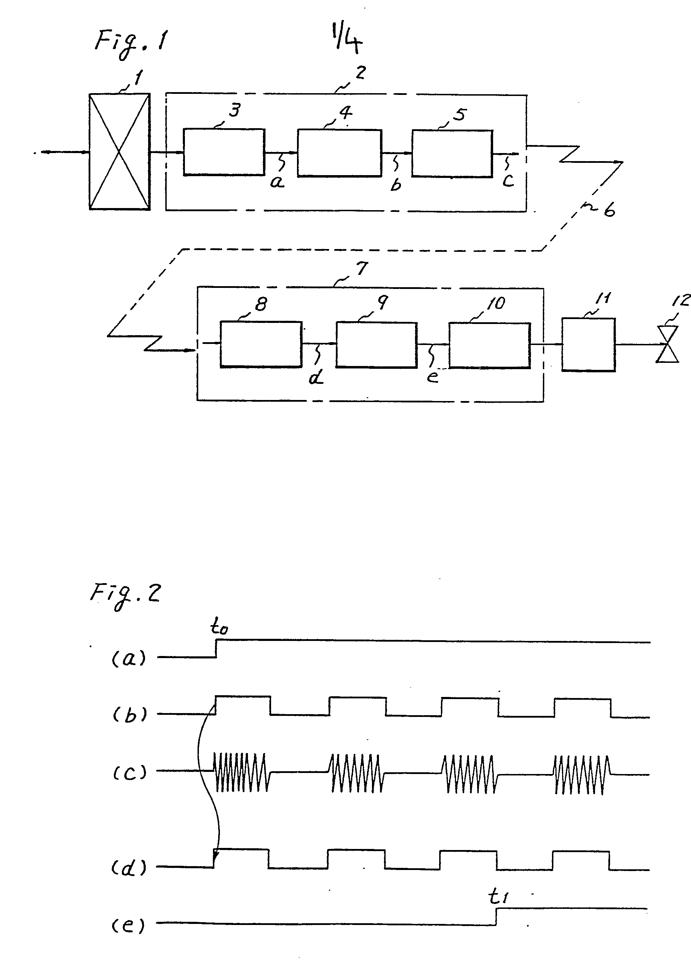

Figure 1 is a block diagram of principal parts of an embodiment of this invention for transmitting a call charging signal. On the exchange side, a charging signal generated from an exchange 1 is detected by a charging signal detecting circuit 3 of radio equipment 2 and is encoded into a pulse code signal by a pulse encoder circuit 4. An out-of-band frequency signal, for example a signal of 3825 Hz in a case in which the voice band is 200 Hz to 3.4 kHz, is generated in accordance with the pulse code signal by an out-of-band frequency generating circuit 5 and the out-of-band frequency signal is modulated together with a voice signal (on to a carrier) and transmitted via a radio link 6.

Radio equipment 7 on the side of a public telephone set 12 detects and demodulates the 3825 Hz signal by means of an out-of-band frequency detecting circuit 8 and the detected and demodulated signal is applied to a pulse counter circuit 9. A charging signal regenerating circuit 10 regenerates a charging signal by having applied thereto a control signal provided when the counter value in the pulse counter circuit reaches a specified value. This charging signal is applied to a charging signal processing circuit 11 associated with telephone set 12.

Figure 2 shows waveforms for assistance in explaining operations of the arrangement of Figure 1. When a charging signal sent from the exchange 1 is detected at a time $t_0$ by the charging signal detecting circuit 3, a detection signal as shown in Figure 2(a) is output from circuit 3. When the detection signal is provided, the pulse encoder circuit 4 outputs a pulse code signal shown in Figure 2(b). This pulse code signal for example consists of a continuous pulse stream having a duty ratio of 50% with a pulse period of 16 mS. The out-of-band frequency generating circuit 5 outputs a signal of an out-of-band frequency, such as 3825 Hz etc., through switching operations effected in response to the pulse code signal and an output as shown in Figure 2(c) is obtained.

The radio equipment 7 on the telephone side detects and demodulates the out-of-band frequency signal of 3825 Hz by means of the out-of-band frequency detecting circuit 8 and performs waveform shaping and outputs a pulse code signal as shown in Figure 2(d). The pulse counter circuit 9 counts the continuous pulses of this pulse code signal and starts the charging signal regenerating circuit 10 for example in dependence upon the count of the pulses and the circuit 10 outputs a charging signal at a time $t_1$ as shown in Figure 2(e).

As explained above, because the charging signal is transmitted and received as an out-of-band frequency signal, no interference with a voice signal results therefrom. Further, since the charging signal is transmitted as a modulated pulse code signal and the received charging signal is demodulated to provide a pulse code signal, and since this pulse code signal is continuously counted and confirmation of receipt of a charging signal given when a specified count value is reached, noise signals are not taken to be charging signals. That is, a charging signal is generated in the radio equipment on the telephone side only after checking for a predetermined pulse count value, such as 3, 4 or 5 pulses, and consequently a momentary pulse signal resulting from noise at an out-of-band frequency, such as FM noise, ignition noise etc., or a continuous signal, can be distinguished from charging signals since they will not provide the proper pulse count, and thereby erroneous charging can be prevented.

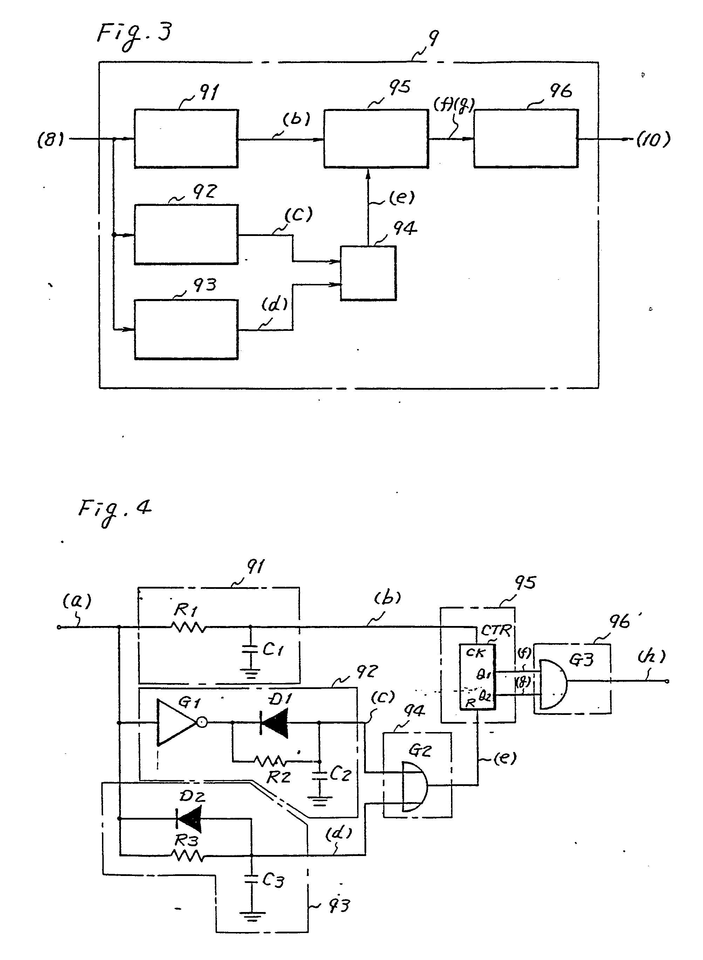

Figure 3 is a block diagram of pulse counter circuit 9 of radio equipment 7 shown in Figure 1. A pulse signal sent from the out-of-band frequency detecting circuit 8 is applied to a filter 91, an idle condition detecting circuit 92 and a continuous signal condition detecting circuit 93. A counter 95 counts pulses of the pulse signal sent from the filter 91 and is reset by a detection signal from either of detecting circuits 92, 93 via an OR circuit 94. A judgement output circuit 96 judges when the count value of counter 95 reaches the specified predetermined count value and outputs a start signal for charging signal regenerating circuit 10.

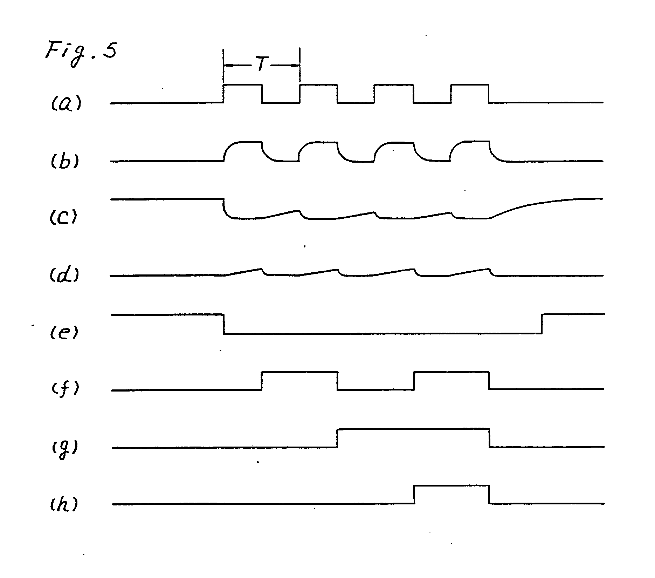

Figure 4 shows a practical circuit configuration of the pulse counter circuit of Figure 3, and Figure 5 shows signal waveforms for assistance in explaining operations of the circuit of Figure 4.

In Figure 4 a resistor R1 and a capacitor C1 form the filter 91; an inverter G1, a diode D1, a resistor R2, and a capacitor C2 form the idle condition detecting circuit 92; a diode D2, a resistor R3 and a capacitor C3 form the continuous signal condition detecting circuit 93; an OR circuit G2 corresponds to the OR circuit 94; a counter CTR corresponds to the counter 95 and an AND circuit G3 corresponds to the judgement output circuit 96.

When pulses of a period T as shown in Figure 5(a) are input to the pulse counter circuit of Figure 4, an output signal as shown in Figure 5(b) is obtained as the output of the filter 91 consisting of the resistor R1 and capacitor C1 and this output signal is applied to a clock terminal CK of a counter CTR.

If the input signal to the pulse counter circuit of Figure 4 is "1" the inverter G1 produces a "0" output and the capacitor C2 discharges via the diode D1. Therefore, the terminal voltage of capacitor C2 (the voltage at the terminal of C2 connected to diode D1 and resistor R2; the other terminal of C2 being earthed as shown) rapidly falls. If the input signal is "0", the output of inverter G1 becomes "1", and the capacitor C2 is charged via the resistor R2. Therefore, the terminal voltage of capacitor C2 (the voltage at the terminal connected to D1 and R2) increases in accordance with a time constant determined by $CR \cdot R2$. Consequently, since the input signal to the pulse counter circuit is "0" in the idle condition, the output signal of the idle condition detecting circuit 92 then becomes "1", but when a pulse signal as shown in Figure 5(a) is input to the pulse counter circuit an output signal of the circuit 92 as shown in Figure 5(c) is obtained.

If the input signal to the pulse counter circuit is "1", the capacitor C3 is charged via the resistor R3 and the terminal voltage of capacitor C3 (the voltage at the terminal of C3 connected to D2 and R3; the other terminal of C3 being earthed as shown) increases in accordance with a time constant determined by $C3 \cdot R3$. If the input signal to the pulse counter circuit is "0", the capacitor C3 discharges via the diode D2. Therefore, when an input signal "1" is applied continuously to the pulse counter circuit, the output signal of the continuous signal condition detecting circuit 93 becomes "1" but when the pulse signal as shown in Figure 5(a) is input to the pulse counter circuit an output signal as shown in Figure 5(d) is obtained from circuit 93.

An output signal of the OR circuit G2 (94) is a logical sum (OR) of the signals shown in Figure 5(c) and (d) and is "1" only if either input signal applied to G2 (from idle condition detecting circuit 92 and continuous signal condition detecting circuit 93) is higher than the gate threshold level of the OR circuit. Thus a signal "0" is applied to a reset terminal R of the counter CTR over a period in which pulses as shown in Figure 5(a) are input to the pulse counter circuit.

Therefore, the counter CTR counts the pulses (received from filter 91) and output terminals $Q_1$, $Q_2$ thereof output signals as shown in Figure 5(f), (g). When both outputs of counter CTR becomes "1", namely when three pulse signals are counted, the output signal of AND circuit G3 becomes "1" as shown in Figure 5(h) and the charging signal generating circuit 10 is started by this output signal.

The filter 91 requires nothing more than a structure which will allow pulse signals of period T to pass therethrough and can be provided with a variety of structures different from that consisting of the resistor R1 and capacitor C1. The time constant determined by the resistor R2 and capacitor C2 of the idle condition detecting circuit 92 and that determined by the resistor R3 and capacitor C3 of the continuous signal condition detecting circuit 93 are selected to be equal to or larger than the period T of the pulse signal and thereby a momentary impulse signal due to out-of-band frequency noise and a continuous signal can be distinguished from pulse signals of period T. Moreover, the judgement output circuit 96 which employ various logical circuit structures which allow the predetermined count value to be flexibly set, for example to from 3 to 5 pulses, but excluding the detection of extremly small count values 0 to 2 and extremely large count values of 6 or more.

In the case of an ordinary radio transmitter, a limiter circuit which limits the amplitude of an input signal is provided in a stage preceding the modulator of the transmitter and thereby operation over a dynamic range which matches the capability of the modulator can be realized. As a result, however, a charging signal carrier superimposed on a voice signal higher than a specified level may sometimes be removed by such a limiter circuit in a case in which the charging signal carrier is simply superimposed on the voice signal and transmitted after modulation.

If a voice signal is first subjected to sufficient amplitude limitation and thereafter a charging signal carrier is superimposed on the voice signal, the resulting signal can be transmitted without disappearance of the charging signal carrier by such a limiter circuit as is mentioned above.

However, excessive amplitude limitation of a voice signal reduces the quality of the voice signal and results in a drastic reduction of S/N ratio.

In an embodiment of the present invention, the voice signal is subjected to a comparatively deep amplitude limitation only for a period in which the charging signal carrier will be superimposed on the voice signal. Thereafter, the charging signal carrier is superimposed on the voice signal. Thus, such a charging signal can be transmitted as a radio signal via a limiter circuit and modulator in the same way as in ordinary radio transmitting equipment.

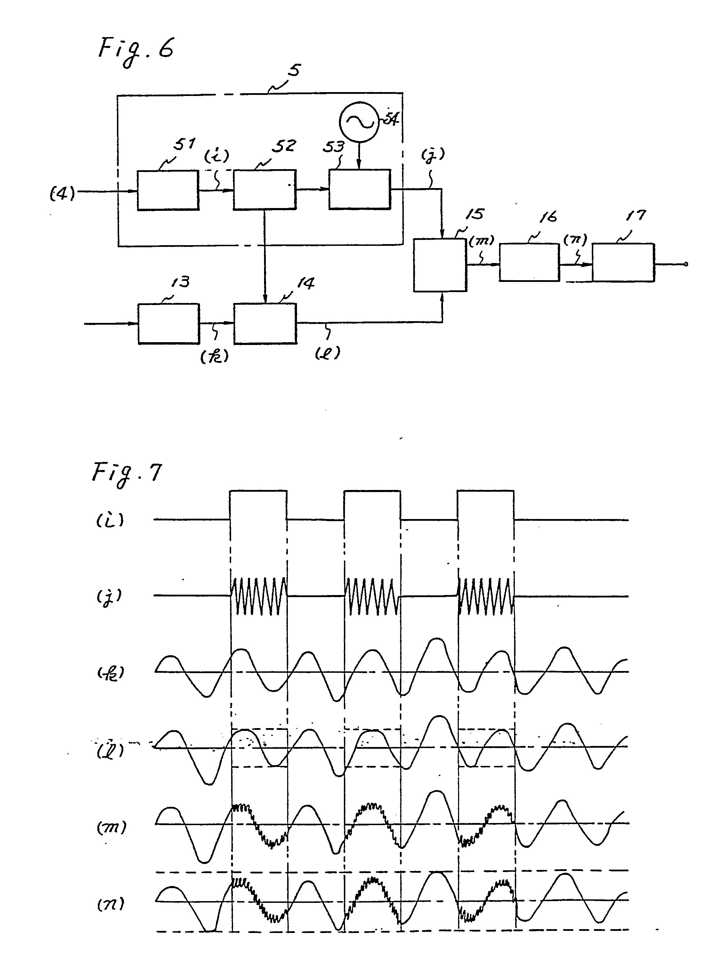

Figure 6 shows principal parts of radio equipment in accordance with such an embodiment of the present invention, namely a transmitter part provided on the exchange side.

In Figure 6, 51 is a detector circuit comprising an amplifier which detects an output sent from a pulse encoder circuit 4 (see Figure 1) provided in a preceding equipment stage and then sends it to a control circuit 52 as a signal of a specified level. The control circuit 52 operates a first limiter circuit 14 in synchronization with the input pulse code signal received from the pulse encoder circuit. 53 is a switching circuit which provides an output of an oscillator 54, which oscillator oscillates at the specified out-of-band frequency (for example, 3825 Hz) in synchronization with the input pulse code signal. 15 is a hybrid circuit for combining signals, which combines the out-of-band frequency signal sent from the switching circuit 53 and the voice signal amplitude-limited by the first limiter circuit 14 and sends the combined signal to a modulator 17 via a second limiter circuit 16. The second limiter circuit 16 and the modulator 17 have the same structure as is used in ordinary radio equipment. For example, a phase-modulated or frequency-modulated signal is generated. The detecting circuit 51, control circuit 52, switching circuit 53 and oscillator 54 form the out-of-band frequency generating circuit 5 shown in Figure 1. Sometimes, the detecting circuit 51 can be eliminated depending on the input pulse code signal (for example when it has sufficient level without amplification), and the signal sent from the pulse encoder circuit 4 can be directly input to the control circuit 52.

In Figure 6, 13 is a level adjusting circuit used in ordinary radio equipment and it is used for adjusting the level of input voice signal in accordance with a degree of modulation.

Operation of the circuitry of Figure 6 will be explained with reference to the waveforms of Figure 7.

In synchronization with a pulse code signal as shown in Figure 7(i) the control circuit 52 operates, opening the switching circuit 53 for specified time intervals. Thereby, as shown in Figure 7(j), the control circuit 52 causes the oscillator 54 to output the out-of-band frequency signal (3825 Hz) and also controls the first limiter circuit 14 in order to limit the levels of a voice input signal (Figure 7(k)) to levels as indicated by the broken lines in Figure 7(I) but only for the specified time intervals. Thus, the amplitude limitation level of the first limiter circuit 14 is determined, in intervals in which the high frequency (3825 Hz) charging signal carrier is superimposed on the voice signal, to such a degree that the superimposed charging signal carrier is not removed by the second limiter circuit 16. Figure 7(k) shows the voice signal before amplitude limitation is executed and Figure 7(I) shows the voice signal after amplitude limitation is executed by the first limiter circuit 14. Since the amplitude limitation by the first limiter circuit 14 is executed only for the periods or time intervals for superimposition of the charging signal carrier, the S/N ratio of voice signal is not worsened so significantly.

After the charging signal carrier of Figure 7(j), output from the switching circuit 53 as explained above, and the voice signal of Figure 7(I), output from the first limiter circuit 14, are combined by the hybrid circuit 15 the signal shown in Figure 7(m) is obtained. This signal is amplitude-limited by the second limiter circuit 16 and is modulated by the modulator 17 as in the case of ordinary radio signal transmission. In the amplitude limitation at the second limiter circuit 16, an input signal higher than the specified level is removed, as shown in Figure 7(n). However, the band amplitude limitation by the first limiter circuit 14 has already been executed for periods in which the charging signal carrier is superimposed and in these periods no part of the input signal is removed. Therefore, the charging signal carrier to be superimposed does not disappear, thereby improving reliability of charging signal transmission. Simultaneously, comparatively deep amplitude limitation is carried out by the first limiter circuit 14 only at timings where the charging signal carrier is superimposed and the S/N ratio when no charging signal carrier is transmitted is not worsened.

As explained above, an embodiment of this invention provides that:

a charging signal is transmitted as the out-of-band frequency signal. A charging signal detecting circuit 3 detects the charging signal sent from the exchange 1 and encodes it into a pulse code signal consisting of plurality of continuous pulses. There are provided in radio equipment 2 on the exchanger side 1 means composed of the pulses encoding circuit 4 and means such as out-of-band frequency generating circuit 5 etc. which modulates the pulse code signal with an out-of-band frequency such as 3825 Hz.

The charging signal sent from the exchange is received and regenerated by providing in radio equipment 7 on the telephone side means such as the out-of-band frequency detection circuit 8, which detects an out-of-band frequency signal and demodulates it into the pulse code signal, counter circuit 9 which counts the continuous pulses of the pulse code signal and means such as the charging signal regenerating circuit 10 which regenerates the charging signal when the counter value reaches the predetermined content. Since the charging signal carrier transmitted together with the voice signal is transmitted as an out-of-band frequency signal, it does not have any influence on the voice signal. Since 50 Hz, 12 kHz, 16 kHz or polarity-inverted charging signals are encoded into pulse code signals and the charging signal is distinguished by counting a specified number of continuous pulses on the telephone side, misrecognition because of FM noise, ignition noise, etc. does not occur and thereby reliability of transmission of the charging signal can be very much improved.

In addition, reliable transmission of charging signal is realized and the S/N ratio when the charging signal carrier is not being transmitted is not reduced. This is provided by deeply limiting the amplitude of only a specified portion of a voice signal in synchronization with a charging signal carrier. Therefore, it is possible to raise the reliability of the charging signal and to maintain the quality of the voice signal.

In the system embodying this invention for transmitting a charging signal from an exchange to a telephone side together with the voice signal, radio equipment on the exchange side detects a charging signal sent from the exchange, encodes it into a pulse code signal consisting of plurality of continuous pulses, thereafter modulates this pulse signal into a signal of a frequency outside the voice transmitting frequency band and then transmits it as a radio signal after it has been superimposed on the voice signal.

Radio equipment on the telephone side detects the charging signal carrier and demodulates it into a pulse code signal, then counts the pulses and transfers this charging signal only when the count reaches a specified value. The radio equipment on the exchange side may execute in advance deep amplitude limitation for periods of the voice signal onto which the out-of-band frequency signal is to be superimposed, and thereby to protect the superimposed charging signal from removal as a result of amplitude limitation by a limiter circuit provided in a stage preceding the modulator on the exchange side.

### Claims

1. A method of transmitting a call charging signal in a telephone, characterised by the steps of:

detecting the call charging signal as sent from an exchange (1), on the exchange (1) side;

encoding the detected charging signal as a pulse code signal consisting of plurality of continuous pulses;

modulating said pulse code signal with a carrier consisting of a frequency signal outside the voice transmitting frequency band of the telephone system;

transmitting the modulated pulse code signal to the user telephone (12) side via a radio link (6) after the modulated pulse code signal is superimposed on a voice signal;

detecting and demodulating said modulated pulse code signal into said pulse code signal on the user telephone (12) side;

counting continuous pulses of said pulse code signal; and

regenerating said charging signal, when the count of continuous pulses of said pulse code signal reaches a predetermined value, on the user telephone (12) side.

2. A method according to claim 1, wherein a radio signal to be transmitted from radio equipment (2) on the exchange (1) side to radio equipment (7) on the user telephone (12) side is modulated by phase-modulation.

3. A method according to claim 1, wherein a radio signal to be transmitted from radio equipment (2) on exchange (1) side to radio equipment (7) in the user telephone (12) side is modulated by frequency-modulation.

4. A method according to claim 1, 2 or 3 wherein said continuous pulses of said pulse code signal on the user telephone (12) side are counted by a counter circuit (9) which is reset by any output of an idle condition detecting circuit (92) or a continuous signal condition detecting circuit (93).

5. A method according to claim 1, 2, 3 or 4, further comprising the steps of:

executing in advance a first amplitude limitation of a voice signal in synchronization with said modulated pulse code signal to be superimposed later on the voice signal;

superimposing said modulated pulse code signal on the voice signal;

executing a second amplitude limitation of the voice signal on which said modulated pulse code signal has been superimposed;

inputting said voice signal after execution of said second amplitude limitation to a modulator (17); and

transmitting the modulated voice signal, on which said modulated pulse code signal is superimposed, to the user telephone (12) side.

6. A method according to claim 5, wherein said first amplitude limitation is executed with sufficient depth in such a degree that the pulse code signal will not be removed by said second amplitude limitation, when said modulated pulse code signal has been superimposed on the voice signal.

7. Apparatus for transmitting a call charging signal in a telephone system having an exchange (1) and a user telephone (12) operable in accordance with a method as claimed in any preceding claim.

### Patentansprüche

1. Verfahren zum Übertragen eines Gesprächsgebührensignals in einem Telephonsystem mit einer Vermittlungsstelle und einem Benutzertelephon, gekennzeichnet durch die folgenden Schritte:

Erfassen des Gesprächsgebührensignals, wie es von der Vermittlungsstelle (1) ausgesendet wird, auf der Seite der Vermittlungsstelle (1),

Kodierung des erfaßten Gesprächsgebührensignals in ein Pulskodesignal, das aus einer Vielzahl von kontinuierlichen Impulsen besteht,

Modulieren des Pulskodesignals mit einem Träger, der aus einem Frequenzsignal außerhalb des Sprache übertragenden Frequenzbandes des Telephonsystems liegt,

Übertragen des modulierten Pulskodesignals zu der Benutzertelephonseite (12) über eine Funkverbindung (6), nachdem des modulierte Pulskodesignal einem Sprachsignal überlagert worden ist,

Erfassen und Demodulieren des genannten modulierten Pulskodesignals in dem genannten Pulskodesignal auf der Benutzertelephonseite (12),

Zählen kontinuierlicher Impulse des Pulskodesignals, und

Regenerierung des Gesprächsgebührensignals, wenn die Zählung der kontinuierlichen Impulse des genannten Pulskodesignals auf der Benutzertelephonseite (12) einen vorbestimmten Wert erreicht.

2. Verfahren nach Anspruch 1, bei welchem ein Funksignal, das von einer Funkeinrichtung (2) auf der Vermittlungsstellenseite (1) zu der Funkeinrichtung (7) auf der Benutzertelephonseite (12) übertragen werden soll, phasenmoduliert wird.

3. Verfahren nach Anspruch 1, bei dem ein Funksignal, das von einer Funkeinrichtung (2) auf der Vermittlungsstellenseite (1) zu der Funkeinrichtung (7) auf der Benutzertelephonseite (12) übertragen werden soll, frequenzmoduliert wird.

4. Verfahren nach Anspruch 1, 2 oder 3, bei dem die genannten kontinuierlichen Impulse des genannten Pulskodesignals auf der Benutzertelephonseite (12) von einer Zählschaltung (9) gezählt werden, die durch einen beliebigen Ausgang einer den Ruhezustand erfassenden Schaltung (92) oder einer den kontinuierlichen Signalzustand erfassenden Schaltung (93) zurückgestellt wird.

5. Verfahren nach einem der Ansprüche 1, 2, 3 oder 4, ferner gekennzeichnet durch die folgenden Schritte:

zuvorige Durchführung einer ersten Amplitudenbegrenzung eines Sprachsignals in Synchronisation mit dem genannten Pulskodesignal, um später dem Sprachsignal überlagert zu werden,

Überlagerung des Sprachsignals mit dem genannten modulierten Pulskodesignal,

Durchführung einer zweiten Amplitudenbegrenzung des Sprachsignals, dem das genannte modulierte Pulskodesignal überlagert worden ist,

Eingabe des Sprachsignals, nach Durchführung der genannten zweiten Amplitudenbegrenzung, in einen Modulator (17), und

Übertragen des modulierten Sprachsignals, dem das genannte modulierte Pulskodesignal überlagert ist, zu der Benutzertelephonseite.

6. Verfahren nach Anspruch 5, bei dem die genannte erste Amplitudenbegrenzung mit hinreichender Tiefe in einem solchen Grad durchgeführt wird, daß das Pulskodesignal durch die genannte zweite Amplitudenbegrenzung nicht entfernt wird, wenn das genannte modulierte Pulskodesignal dem Sprachsignal überlagert worden ist.

7. Vorrichtung zur Übertragung eines Gesprächsgebührensignals in einem Telephonsystem mit einer Vermittlungsstelle (1) und einem Benutzertelephon (12), die nach dem Verfahren nach einem der vorhergehenden Ansprüche arbeitet.

## Revendications

1. Procédé pour transmettre un signal de taxation d'appel dans un système téléphonique comportant un central et un poste téléphonique d'usager, caractérisé en ce qu'il consiste à:

détecter le signal de taxation d'appel tel qu'envoyé par un central (1), du côté central (1);

coder le signal de taxation détecté comme un signal d'impulsions codées constitué d'un ensemble d'impulsions continues;

moduler le signal d'impulsions codées avec un signal porteur constitué par un signal de fréquence située hors de la bande de fréquences de transmission de voix du système téléphonique;

transmettre le signal d'impulsions codées modulé au côté de poste téléphonique d'usager (12) par une liaison radio (6) après que le signal d'impulsions codées modulé ait été superposé à un signal de voix;

détecter et démoduler le signal d'impulsions codées modulé pour obtenir le signal d'impulsions codées du côté poste téléphonique d'usager (12);

compter les impulsions continues du signal d'impulsions codées; et

régénérer le signal de taxation, quand le compte des impulsions continues du signal d'impulsions codées atteint une valeur prédéterminée, du côté poste téléphonique d'usager (12).

2. Procédé selon la revendication 1, caractérisé en ce qu'un signal radio à transmettre d'une installation radio (2) du côté central (1) jusqu'à une installation radio (7) du côté poste téléphonique d'usager (12) est modulé par modulation de phase.

3. Procédé selon la revendication 1, caractérisé en ce qu'un signal radio à transmettre d'une installation radio (2) du côté central (1) jusqu'à une installation radio (7) du côté poste téléphonique d'usager (12) est modulé par modulation de fréquence.

4. Procédé selon l'une quelconque des revendications 1 à 3, caractérisé en ce que les impulsions continues du signal d'impulsions codées du côté poste téléphonique d'usager (12) sont comptées par un circuit compteur (9) qui est remis à zéro par un signal de sortie d'un circuit de détection de condition hors service (92) ou d'un circuit de détection de condition de signal continu (93).

5. Procédé selon l'une quelconque des revendications 1 à 4, caractérisé en ce qu'il consiste en outre à:

exécuter par avance une première limitation d'amplitude d'un signal de voix en synchronisation avec le signal d'impulsions codées modulé à superposer ultérieurement au signal de voix;

superposer le signal d'impulsions codées modulé au signal de voix;

exécuter une seconde limitation d'amplitude du signal de voix auquel le signal d'impulsions codées modulé a été superposé;

introduire le signal de voix après l'exécution de la seconde limitation d'amplitude dans un modulateur (17); et

transmettre le signal de voix modulé, auquel le signal d'impulsions codées modulé est superposé, au côté poste téléphonique d'usager (12).

6. Procédé selon la revendication 5, caractérisé en ce que la première limitation d'amplitude est exécutée avec une importance suffisante pour que le signal d'impulsions codées ne soit pas supprimé par la seconde limitation d'amplitude, quand le signal d'impulsions codées modulé a été superposé au signal de voix.

7. Dispositif pour transmettre un signal de taxation d'appel dans un système téléphonique com-

13　0 076 645　14

portant un central (1) et un poste téléphonique d'usager (12), pouvant fonctionner selon le procédé tel que revendiqué dans l'une quelconque des revendications 1 à 6.

Fig.1

1/4

Fig.2

*Fig.3*

*Fig.4*

Fig.5

Fig.6

Fig.7